# EUROPEAN PATENT SPECIFICATION

(11) **EP 3 670 296 B1**
(45) Date of publication and mention of the grant of the patent: **10.09.2025**
(21) Application number: 19216026.5
(22) Date of filing: 13.12.2019
(51) Int. Cl.: B62D 1/189, B62D 1/19

(54) **STEERING COLUMN DEVICE**
LENKSÄULENVORRICHTUNG
DISPOSITIF DE COLONNE DE DIRECTION

(30) Priority: 21.12.2018 JP 2018239491
(43) Date of publication of application: 24.06.2020
(73) Proprietor: JTEKT CORPORATION, Aichi-ken, 448-8652 (JP)
(72) Inventor: TSURUOKA, Shouta, Osaka-shi, Osaka 542-8502 (JP)
(74) Representative: Winter, Brandl - Partnerschaft mbB

(56) References cited:
- JP-A- H10 129 501
- US-A1- 2008 106 086
- US-A1- 2011 100 148

## Description

### BACKGROUND OF THE INVENTION

### 1. Field of the Invention

The present invention relates to a steering column device for a vehicle, the steering column device being configured to support a steering shaft to which a steering wheel is attached.

### 2. Description of Related Art

A steering column device for a vehicle is attached to a steering support member connected to a vehicle body and supports a steering shaft such that the steering shaft is rotatable. The steering column device may be disposed behind a brake pedal arm in a vehicle front-rear direction as described in Japanese Unexamined Patent Application Publication No. 9-221042 (JP 9-221042 A), for example. In this case, the brake pedal arm may collide with a support member (e.g., a lower bracket) that supports the steering column when a vehicle collision occurs.

The steering column device described in JP 9-221042 A is configured such that the collision position, at which the brake pedal arm may collide with the lower bracket if a vehicle collision occurs, is shifted rearward in the vehicle front-rear direction to extend a rearward movable distance, that is, a distance through which the brake pedal arm is movable rearward. This reduces the probability that a collision occurs between the brake pedal arm and the lower bracket. A steering column device having the features of the preamble of claim 1 is known from US 2011/100148A1. JP H10 129501 A describes an automotive steering support structure.

### SUMMARY OF THE INVENTION

However, even if the rearward movable distance for the brake pedal arm is extended, the brake pedal arm may collide with the support member that supports the steering column, depending on the magnitude of the impact at the time of a vehicle collision. In addition, due to restrictions on the layout of a vehicle, there may be a case where the sufficient rearward movable distance for the brake pedal arm cannot be secured. If the support member for the steering column is broken by the collision with the brake pedal arm, the steering column device may fall off.

The present invention, which is defined in claim 1, provides a steering column device that makes it possible to reduce the possibility that a support member for a steering column is broken even when a member collides with the support member at the time of a vehicle collision, the member being disposed ahead of the support member in a vehicle front-rear direction when the steering column device is mounted in a vehicle. Advantageous further developments are subject-matter of the dependent claims.

An aspect of the present invention relates to a steering column device for a vehicle. The steering column device includes a steering column configured to support a steering shaft to which a steering wheel is attached; and a support member configured to support the steering column such that the steering column is swingable with respect to an attachment member on a side of a vehicle body. The support member includes a first plate portion attached to the attachment member, a second plate portion attached on a side of the steering column, and a receiving portion disposed between the first plate portion and the second plate portion. The receiving portion is disposed at a position where a member collides with the receiving portion when a vehicle collision occurs, the member being disposed ahead of the support member in a vehicle front-rear direction when the steering column device is mounted in the vehicle. The receiving portion is configured to reduce an impact to be applied to the first plate portion and the second plate portion when the receiving portion collides with the member.

The steering column device according to the above aspect of the present invention makes it possible to reduce the possibility that the support member that supports the steering column is broken due to a collision between the support member for the steering column and the member that is disposed ahead of the support member in the vehicle front-rear direction when the steering column device is mounted in the vehicle.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a configuration diagram showing a steering column device according to an embodiment of the present invention;
FIG. 2 is a sectional view schematically showing a configuration of the steering column device;
FIG. 3 is a perspective view showing a part of the steering column device together with a brake pedal and a brake pedal arm;
FIG. 4A is a perspective view showing a support member; and
FIG. 4B is a front view of the support member when viewed from a front side.

### DETAILED DESCRIPTION OF EMBODIMENTS

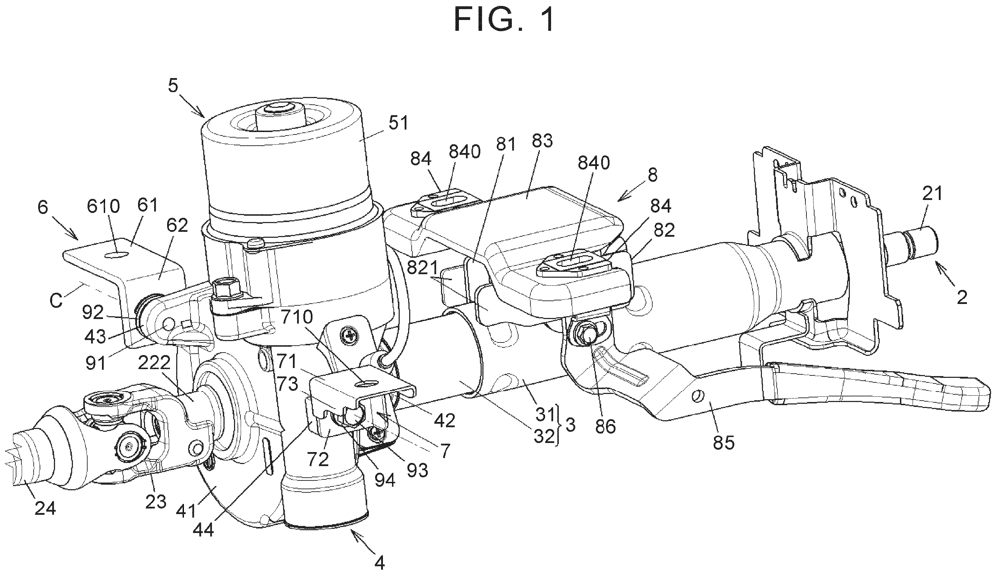

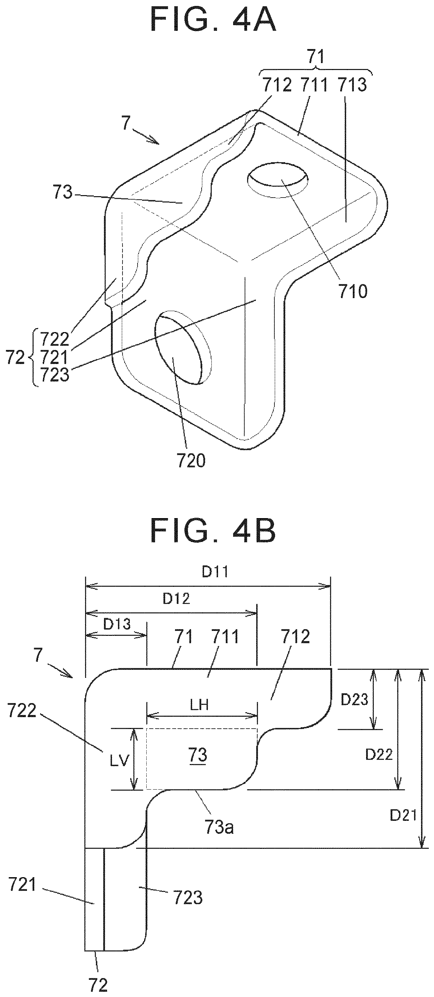

An embodiment of the present invention will be described with reference to FIGS. 1 to 4A and 4B. The embodiment is described below as an example for implementing the present invention, and the technical scope of the present invention is not limited to the embodiment.

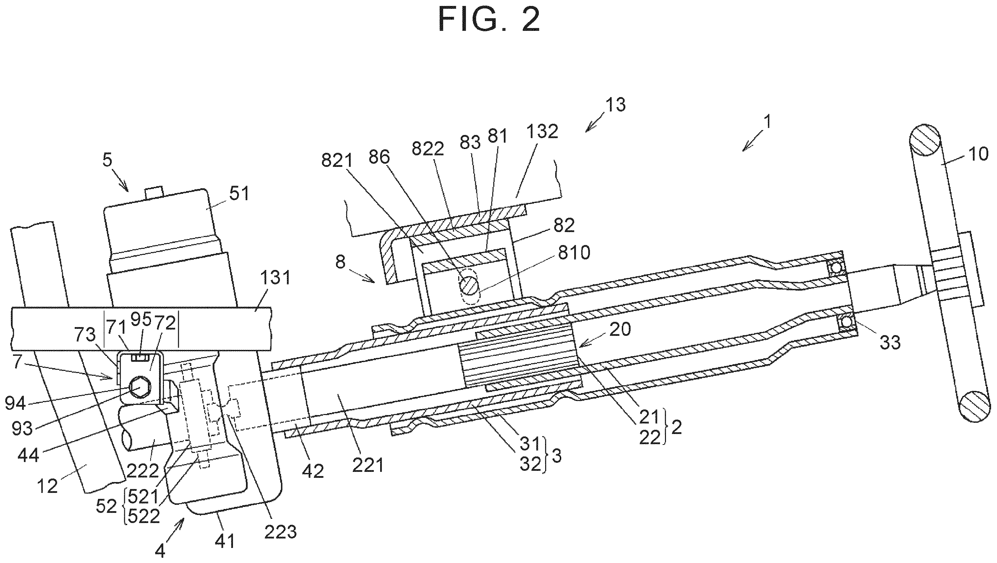

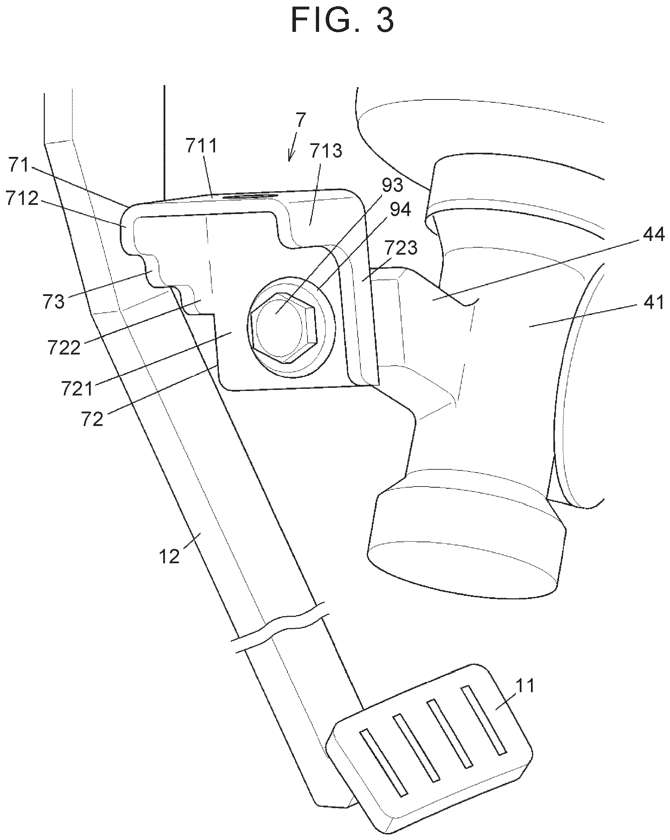

FIG. 1 is a configuration diagram showing a steering column device according to the embodiment of the present invention. FIG. 2 is a sectional view schematically showing a configuration of the steering column device mounted on a vehicle. FIG. 3 is a perspective view showing a part of the steering column device together with a brake pedal and a brake pedal arm.

The steering column device 1 is configured as a column-assist type power steering device that assists a steering operation performed by a driver. In the following description, a right-left direction (a width direction), an up-down direction (a height direction), and a front-rear direction (a longitudinal direction) signify a right-left direction (a width direction), an up-down direction (a height direction), and a front-rear direction (a longitudinal direction) with respect to a vehicle when the steering column device 1 is mounted on the vehicle.

The steering column device 1 includes a steering shaft 2, a steering column 3, a gear housing 4, a steering assist mechanism 5, first and second support members 6, 7, and a lock mechanism 8. The steering shaft 2 is coupled to a steering wheel 10 (refer to FIG. 2) as a steering member with which the driver performs the steering operation. The steering column 3 supports the steering shaft 2. The gear housing 4 is attached to the steering column 3. The steering assist mechanism 5 assists the steering operation of the steering wheel 10 by the driver. The first and second support members 6, 7 support the gear housing 4 such that the gear housing 4 is swingable with respect to the stays of the steering member 13 that serves as an attachment member on the side of a vehicle body (i.e., an attachment member connected to a vehicle body). The lock mechanism 8 is capable of fixing the steering column 3 with respect to a column attachment portion 132 of the steering member 13. The steering member 13 includes the pair of the stays between which the gear housing 4 is interposed in a vehicle width direction. FIG. 2 shows one of the stays (i.e., a stay 131) to which the second support member 7 is attached.

The steering shaft 2 rotates integrally with the steering wheel 10. When the steering shaft 2 rotates, a rack shaft (not illustrated) is moved in the vehicle width direction, and steered wheels of the vehicle (front wheels) are steered via tie rods coupled to respective ends of the rack shaft.

The steering shaft 2 includes a tubular upper shaft 21 having one end to which the steering wheel 10 is fixed, and a lower shaft 22 including a spline fitting portion 20 that is fitted to the upper shaft 21. The lower shaft 22 includes a first shaft portion 221 close to the upper shaft 21, a second shaft portion 222 that is disposed coaxially with the first shaft portion 221, and a torsion bar 223 that couples the first shaft portion 221 with the second shaft portion 222. The torsion bar 223 is twisted by a steering torque applied to the steering wheel 10, and a twist amount of the twisted torsion bar 223 is detect by a torque sensor (not illustrated). An intermediate shaft 24 is connected to the second shaft portion 222 via a universal joint 23 (shown in FIG. 1).

The steering column 3 includes an outer tube 31 and an inner tube 32 having one end accommodated in the outer tube 31. The lower shaft 22 is inserted into the inner tube 32. A bearing 33 is disposed between an inner peripheral surface at an end portion of the outer tube 31 and an outer peripheral surface of the upper shaft 21, the end portion of the outer tube 31 being located on the side of the steering wheel 10.

The gear housing 4 includes a main body portion 41, a tubular portion 42, a first arm portion 43, and a second arm portion 44. The main body portion 41 accommodates a worm gear 52 of the steering assist mechanism 5 to be described later. The inner tube 32 is externally fitted to the tubular portion 42. The first support member 6 is attached to the first arm portion 43, and the second support member 7 is attached to the second arm portion 44. The first arm portion 43 is provided on the right side of the main body portion 41, and the second arm portion 44 is provided on the left side of the main body portion 41. The first support member 6 is attached to the first arm portion 43 with the use of a tilt bolt 91 and a bush 92. Similarly, the second support member 7 is attached to the second arm portion 44 with the use of a tilt bolt 93 and a bush 94.

The tilt bolts 91 and 93 are screwed into the first and second arm portions 43 and 44, respectively. The central axis of each of the tilt bolts 91 and 93 serves as a tilt central axis C used when tilting of the steering wheel 10 is adjusted to adjust a position of the steering wheel 10 in the vehicle up-down direction. When tilting is adjusted, the gear housing 4 and the steering column 3 swing about the tilt central axis C. The bushes 92 and 94 are externally fitted to the first and second tilt bolts 91 and 93 so that the gear housing 4 and the steering column 3 swing smoothly.

The first support member 6 includes a flat plate portion 61 and a side plate portion 62. The flat plate portion 61 and the side plate portion 62 are provided integrally with each other (i.e., the flat plate portion 61 and the side plate portion 62 constitute an integral unit). The flat plate portion 61 is attached to the stay (not illustrated) of the steering member 13. The side plate portion 62 is attached to the first arm portion 43. The flat plate portion 61 has a through-hole 610 through which a bolt for attaching the flat plate portion 61 to the stay is inserted. The side plate portion 62 has a through-hole through which the tilt bolt 91 and the bush 92 are inserted. The second support member 7 will be described later.

The steering assist mechanism 5 includes an electric motor 51 and a worm gear 52 that reduces the speed of the output rotation of the electric motor 51 and transmits the rotation, whose speed has been reduced, to the second shaft portion 222 of the lower shaft 22 as a steering assist force. The electric motor 51 is supplied with a motor current from a controller (not illustrated). The motor current corresponds to the steering torque detected by the torque sensor. The worm gear 52 includes a worm gear shaft 521 that rotates integrally with an output shaft of the electric motor 51, and a worm wheel 522 that meshes with the worm gear shaft 521. The worm wheel 522 is fixed to the second shaft portion 222.

The lock mechanism 8 includes a column bracket 81, a clamping bracket 82, an attachment bracket 83, a pair of capsules 84, an operation lever 85, and a tightening shaft 86. The column bracket 81 is fixed to the outer tube 31 of the steering column 3 by welding, for example. The clamping bracket 82 includes a pair of side walls 821 between which the column bracket 81 is interposed and a top plate 822 that connects the side walls 821. The attachment bracket 83 extends in the vehicle width direction and is fixed to the top plate 822 of the clamping bracket 82. The capsules 84 are attached to the respective ends of the attachment bracket 83. The operation lever 85 is operated by a driver. The tightening shaft 86 presses the side walls 821 of the clamping bracket 82 against the column bracket 81 in accordance with the operation of the operation lever 85. The tightening shaft 86 is inserted through an elongate hole 810 formed on the column bracket 81.

When the side walls 821 of the clamping bracket 82 are pressed by the tightening shaft 86 to clamp the column bracket 81, the steering column 3 is locked (fixed) to the steering member 13. When the lock is unlocked, the steering column 3 and the gear housing 4 are allowed to swing about the tilt central axis C.

The capsules 84 are fixed to the column attachment portion 132 of the steering member 13 by bolts (not illustrated) that are respectively inserted through bolt insertion holes 840. The attachment bracket 83 includes engagement portions each of which has a U-shape that opens toward the steering wheel 10. Each of the capsules 84 is engaged with the corresponding engagement portion. At the time of a secondary collision in which the vehicle collides with an obstacle, etc., while the vehicle travels forward and the driver is caused to collide with the steering wheel 10, the attachment bracket 83 is detached from the capsules 84 and moves forward in the vehicle together with the outer tube 31. During this, the lower shaft 22 enters the inside of the upper shaft 21 while absorbing the impact caused by the secondary collision. This reduces the impact received by the driver during the secondary collision.

When a vehicle collision occurs, there may be a case where the brake pedal arm 12 that is disposed ahead of the second support member 7 moves rearward in the vehicle front-rear direction, and collides with the second support member 7. In this case, since the attachment bracket 83 is detached from the capsules 84 as described above, if the second support member 7 is damaged by the brake pedal arm 12 colliding with the second support member 7 and the first support member 6 is also damaged, the steering column 3 may fall off together with the gear housing 4 and the steering assist mechanism 5.

According to the embodiment of the present invention, falling off of the steering column 3, and so on at the time of a vehicle collision is restrained with the use of the structure of the second support member 7 to be described below. This structure will be described in detail. In the following description, the second support member 7 is simply referred to as the support member 7. Further, in the following description, an example where the brake pedal arm 12 collides with the support member 7 at the time of the vehicle collision will be described. However, the brake pedal arm 12 is merely one example of a member disposed ahead of the support member 7 in the vehicle front-rear direction when the steering column device is mounted in the vehicle. Therefore, it is also assumed that a member other than the brake pedal arm 12 may collide with the support member 7 when a vehicle collision occurs.

FIG. 4A is a perspective view showing the support member 7. FIG. 4B is a front view of the support member 7 when viewed from the front side.

The support member 7 includes a first plate portion 71, a second plate portion 72, and a receiving portion 73. The first plate portion 71 is attached to the stay 131 of the steering member 13. The second plate portion 72 is attached on the side of the steering column 3. The receiving portion 73 is disposed between the first plate portion 71 and the second plate portion 72 and faces the brake pedal arm 12 in the vehicle front-rear direction. In FIG. 4B, the receiving portion 73 is surrounded by a broken line. The receiving portion 73 reduces the impact to be applied on the first and second plate portions 71 and 72 when the receiving portion 73 collides with the brake pedal arm 12 at the time of a vehicle collision.

The second plate portion 72 is disposed to face in the vehicle width direction, and the first plate portion 71 extends in the vehicle width direction from an upper end of the second plate portion 72. The receiving portion 73 has a rectangular shape, and each of the long sides of the receiving portion 73 extends in the vehicle width direction. That is, the long-side direction of the receiving portion 73 (i.e., the direction in which the long sides of the receiving portion 73 extend) is the vehicle width direction. The length of the receiving portion 73 in the long-side direction that is the vehicle width direction is shorter than the length of the first plate portion 71 in the same direction (i.e., the vehicle width direction). Each of the short sides of the receiving portion 73 extends in the vehicle height direction (vehicle up-down direction). That is, the short-side direction of the receiving portion 73 (i.e., the direction in which the short sides of the receiving portion 73 extend) is the vehicle height direction. The length of the receiving portion 73 in the short-side direction that is the vehicle height direction is shorter than the length of the second plate portion 72 in the same direction (i.e., the vehicle height direction). The length of the receiving portion 73 in the long-side direction is shorter than the length of the first plate portion 71 in the same direction, and the length of the receiving portion 73 in the short-side direction is shorter than the length the second plate portion 72 in the same direction. This allows the receiving portion 73 to easily deform when the receiving portion 73 collides with the brake pedal arm 12. That is, the strength of the receiving portion 73 is set to be relatively low in the support member 7. Since the receiving portion 73 collides with the brake pedal arm 12, the impact transmitted to the first plate portion 71 and the second plate portion 72 is reduced.

The first plate portion 71 includes a flat plate portion 711 that has a flat plate shape (i.e., a flat plate portion 711 in a form of a flat plate), a front curved portion 712, and a rear curved portion 713. The front curved portion 712 extends downward from a front end of the flat plate portion 711 in the vehicle front-rear direction. The rear curved portion 713 extends downward from a rear end of the flat plate portion 711 in the vehicle front-rear direction. The front curved portion 712 and the rear curved portion 713 are curved to form a substantially U-shape together with the flat plate portion 711 when the first plate portion 71 is viewed in the vehicle width direction. The flat plate portion 711 has a through-hole 710 through which a bolt 95 (refer to FIG. 2) for attaching the flat plate portion 711 to the stay 131 is inserted. The flat plate portion 711 of the first plate portion 71 is an example of a first flat plate portion according to the invention, and the front curved portion 712 is an example of a first curved portion according to the present invention.

The second plate portion 72 includes a flat plate portion 721 that has a flat plate shape (i.e., a flat plate portion 721 in a form of a flat plate), a front curved portion 722, and a rear curved portion 723. The front curved portion 722 extends from a front end of the flat plate portion 721 in the vehicle front-rear direction toward the first plate portion 71 in the vehicle width direction (i.e., toward the left side in the vehicle width direction in the embodiment). The rear curved portion 723 extends from a rear end of the flat plate portion 721 in the vehicle front-rear direction toward the first plate portion 71 in the vehicle width direction. The front curved portion 722 and the rear curved portion 723 are both curved to form a substantially U-shape together with the flat plate portion 721 when the second plate portion 72 is viewed from below. The flat plate portion 721 has a through-hole 720 to which a bush 94 is attached and through which a tilt bolt 93 is inserted. In the second plate portion 72, the flat plate portion 721 is an example of a second flat plate portion according to the present invention, and the front curved portion 722 is an example of a second curved portion according to the present invention.

According to the embodiment of the present invention, the flat plate portion 711 of the first plate portion 71 forms a right angle with the flat plate portion 721 of the second plate portion 72, and the flat plate portion 711 of the first plate portion 71 is disposed to extend horizontally. However, the angle formed by the flat plate portions 711 and 721 is not limited to the right angle, and may be an obtuse angle or an acute angle. Further, according to the embodiment of the present invention, the length of the front curved portion 722 in the vertical direction is shorter than the length of the rear curved portion 723 in the vertical direction. However, the length of the front curved portion 722 in the vertical direction may be the same as the length of the rear curved portion 723 in the vertical direction.

The receiving portion 73 is disposed between the front curved portion 712 of the first plate portion 71 and the front curved portion 722 of the second plate portion 72. According to the embodiment of the present invention, the receiving portion 73 has a flat plate shape and forms the right angle with the flat plate portion 711 of the first plate portion 71 and forms the right angle with the flat plate portion 721 of the second plate portion 72. The receiving portion 73 is disposed to face the brake pedal arm 12 in the vehicle front-rear direction when the steering column device 1 is mounted in the vehicle.

The second plate portion 72 is formed by stamping a steel plate. The thickness of each of the first plate portion 71, the second plate portion 72, and the receiving portion 73 is 3.2 mm, for example. An example of the dimensions of each portion in FIG. 4B is as follows: D11 is 36 mm, D12 is 28 mm, D13 is 10 mm, D21 is 30 mm, D22 is 20 mm, and D23 is 10 mm. The length (LH) of the receiving portion 73 in the horizontal direction may be one-third to one-half of the length (D11) of the first plate portion 71 in the horizontal direction. The length (LV) of the receiving portion 73 in the vehicle height direction may be one-fourth to one-half of the length (D21) of the front curved portion 722 of the second plate portion 72 in the vehicle height direction. In the illustrated example in FIG. 4B, the length (LH) of the receiving portion 73 in the horizontal direction is one-half of the length (D11) of the first plate portion 71 in the horizontal direction, and the length (LV) of the receiving portion 73 in the vehicle height direction is one-third of the length (D21) of the front curved portion 722 of the second plate portion 72 in the vehicle height direction.

A lower side 73a is a straight line portion at a lower end portion of the receiving portion 73 in the vertical direction. The lower side 73a extends in parallel with the flat plate portion 711 of the first plate portion 71. The lower side 73a extends in the horizontal direction. The lower end of the receiving portion 73 in the vertical direction is a portion at which the brake pedal arm 12 first collides with the support member 7 at the time of a vehicle collision.

Effects of the embodiment will be described. According to the embodiment described above, even if the brake pedal arm 12 collides with the support member 7 that supports the steering column 3 when a vehicle collision occurs, the receiving portion 73 receives the impact caused by collision with the brake pedal arm 12 so that the impact to be applied to the first and second plate portions 71 and 72 is reduced. This reduces the possibility that a portion between the first plate portion 71 and the second plate portion 72 in the support member 7 may be broken, for example. Further, in the embodiment of the present invention, the strength of the receiving portion 73 is reduced due to the dimensional relationship as described above. Therefore, the impact caused by the collision with the brake pedal arm 12 is dispersed, and thus, stress concentration on a part of the support member 7 is reduced. More specifically, stress concentration on the front curved portion 712 of the first plate portion 71 and the front curved portion 722 of the second plate portion 72 is reduced.

Although the embodiment of the present invention has been described, the present invention is not limited to the embodiment. It should be noted that not all combinations of the features described in the embodiment are essential for the solution of the invention to the problem.

The embodiment may be modified in various ways within the scope of the invention as defined by the claims. For example, the dimensions and thicknesses of portions of the support member 7 including the receiving portion 73 are not limited to those described above as an example. In the embodiment described above, the present invention is applied to the steering column device 1 that is configured as a power steering device including the steering assist mechanism 5. However, the present invention is not limited to this configuration. The present invention may be applied to a steering column device that does not include the steering assist mechanism 5.

## Claims

1. A steering column device (1) for a vehicle, the steering column device (1) comprising:
a steering column (3) configured to support a steering shaft (2) to which a steering wheel is attached; and
a support member (7) configured to support the steering column (3) such that the steering column (3) is swingable with respect to an attachment member on a side of a vehicle body, wherein:
the support member (7) includes a first plate portion (71) attached to the attachment member, a second plate portion (72) attached on a side of the steering column (3), and a receiving portion (73) disposed between the first plate portion (71) and the second plate portion (72);
the receiving portion (73) is disposed at a position so that the receiving portion (73) collides with a member when a vehicle collision occurs, the member being disposed ahead of the support member (7) in a vehicle front-rear direction when the steering column device (1) is mounted in the vehicle; and
the receiving portion (73) is configured to reduce an impact to be applied to the first plate portion (71) and the second plate portion (72) when the receiving portion (73) collides with the member, **characterized in that**
the receiving portion (73) has a rectangular shape, and a direction in which long sides of the receiving portion (73) extend is a vehicle width direction.

2. The steering column device (1) according to claim 1, wherein:
the second plate portion (72) is disposed to face in a vehicle width direction; and
a length of the receiving portion (73) in a vehicle height direction is shorter than a length of the second plate portion (72) in the vehicle height direction.

3. The steering column device (1) according to claim 1 or 2, wherein:
the first plate portion (71) extends in a vehicle width direction from an upper end of the second plate portion (72); and
a length of the receiving portion (73) in the vehicle width direction is shorter than a length of the first plate portion (71) in the vehicle width direction.

4. The steering column device (1) according to any one of claims 1 to 3, wherein:
the first plate portion (71) includes a first flat plate portion (711) having a flat plate shape, and a first curved portion (712) that extends downward from a front end of the first flat plate portion (711) in the vehicle front-rear direction;
the second plate portion (72) includes a second flat plate portion (721) having the flat plate shape, and a second curved portion (722) that extends from a front end of the second flat plate portion (721) in the vehicle front-rear direction toward the first plate portion (71); and
the receiving portion (73) is disposed between the first curved portion (712) and the second curved portion (722).

## Patentansprüche

1. Lenksäulenvorrichtung (1) für ein Fahrzeug, wobei die Lenksäulenvorrichtung (1) Folgendes umfasst:
eine Lenksäule (3), die konfiguriert ist, um eine Lenkwelle (2) zu stützen, an der ein Lenkrad angebracht ist; und
ein Tragelement (7), das konfiguriert ist, um die Lenksäule (3) so zu stützen, dass die Lenksäule (3) in Bezug auf ein Anbringungselement auf einer Seite einer Fahrzeugkarosserie schwenkbar ist, wobei:
das Tragelement (7) einen ersten Plattenabschnitt (71), der an dem Anbringungselement angebracht ist, einen zweiten Plattenabschnitt (72), der an einer Seite der Lenksäule (3) angebracht ist, und einen Aufnahmeabschnitt (73), der zwischen dem ersten Plattenabschnitt (71) und dem zweiten Plattenabschnitt (72) angeordnet ist, beinhaltet;
der Aufnahmeabschnitt (73) an einer Position angeordnet ist, so dass der Aufnahmeabschnitt (73) mit einem Element kollidiert, wenn eine Fahrzeugkollision auftritt, wobei das Element vor dem Tragelement (7) in einer Fahrzeuglängsrichtung angeordnet ist, wenn die Lenksäulenvorrichtung (1) in dem Fahrzeug montiert ist; und
der Aufnahmeabschnitt (73) so konfiguriert ist, dass er einen Aufprall auf den ersten Plattenabschnitt (71) und den zweiten Plattenabschnitt (72) verringert, wenn der Aufnahmeabschnitt (73) mit dem Element kollidiert, **dadurch gekennzeichnet, dass**
der Aufnahmeabschnitt (73) eine rechteckige Form aufweist und eine Richtung, in der sich lange Seiten des Aufnahmeabschnitts (73) erstrecken, eine Fahrzeugbreitenrichtung ist.

2. Lenksäulenvorrichtung (1) nach Anspruch 1, wobei:
der zweite Plattenabschnitt (72) so angeordnet ist, dass er in eine Fahrzeugbreitenrichtung weist; und
eine Länge des Aufnahmeabschnitts (73) in einer Fahrzeughöhenrichtung kürzer ist als eine Länge des zweiten Plattenabschnitts (72) in der Fahrzeughöhenrichtung.

3. Lenksäulenvorrichtung (1) nach Anspruch 1 oder 2, wobei:
sich der erste Plattenabschnitt (71) in einer Fahrzeugbreitenrichtung von einem oberen Ende des zweiten Plattenabschnitts (72) erstreckt; und
eine Länge des Aufnahmeabschnitts (73) in der Fahrzeugbreitenrichtung kürzer ist als eine Länge des ersten Plattenabschnitts (71) in der Fahrzeugbreitenrichtung.

4. Lenksäulenvorrichtung (1) nach einem der Ansprüche 1 bis 3, wobei:
der erste Plattenabschnitt (71) einen ersten flachen Plattenabschnitt (711), der eine flache Plattenform aufweist, und einen ersten gekrümmten Abschnitt (712), der sich von einem vorderen Ende des ersten flachen Plattenabschnitts (711) in der Fahrzeuglängsrichtung nach unten erstreckt, beinhaltet;
der zweite Plattenabschnitt (72) einen zweiten flachen Plattenabschnitt (721) mit der flachen Plattenform und einen zweiten gekrümmten Abschnitt (722), der sich von einem vorderen Ende des zweiten flachen Plattenabschnitts (721) in der Fahrzeuglängsrichtung zu dem ersten Plattenabschnitt (71) erstreckt, beinhaltet; und
der Aufnahmeabschnitt (73) zwischen dem ersten gekrümmten Abschnitt (712) und dem zweiten gekrümmten Abschnitt (722) angeordnet ist.

## Revendications

1. Dispositif de colonne de direction (1) pour véhicule, le dispositif de colonne de direction (1) comprenant:
une colonne de direction (3) conçue pour supporter un arbre de direction (2) auquel est fixé un volant; et
un élément de support (7) conçu pour supporter la colonne de direction (3) de sorte que la colonne de direction (3) peut pivoter par rapport à un élément de fixation sur un côté d'une carrosserie, où:
l'élément de support (7) inclut une première partie de plaque (71) fixée à l'élément de fixation, une deuxième partie de plaque (72) fixée sur un côté de la colonne de direction (3), et une partie de réception (73) disposée entre la première partie de plaque (71) et la deuxième partie de plaque (72);
la partie de réception (73) est disposée à une position telle que la partie de réception (73) entre en collision avec un élément lorsqu'une collision de véhicule se produit, l'élément étant disposé en avant de l'élément de support (7) dans un sens avant-arrière du véhicule lorsque le dispositif de colonne de direction (1) est monté dans le véhicule; et
la partie de réception (73) est configurée pour réduire un impact à appliquer à la première partie de plaque (71) et la deuxième partie de plaque (72) lorsque la partie de réception (73) entre en collision avec l'élément, **caractérisé en ce que**
la partie de réception (73) a une forme rectangulaire, et un sens dans lequel les grands côtés de la partie de réception (73) s'étendent est un sens de la largeur du véhicule.

2. Dispositif de colonne de direction (1) selon la revendication 1, dans lequel:
la deuxième partie de plaque (72) est disposée pour être tournée dans un sens de la largeur du véhicule; et
une longueur de la partie de réception (73) dans un sens de la hauteur du véhicule est inférieure à une longueur de la deuxième partie de plaque (72) dans le sens de la hauteur du véhicule.

3. Dispositif de colonne de direction (1) selon la revendication 1 ou 2, dans lequel:
la première partie de plaque (71) s'étend dans un sens de la largeur du véhicule depuis une extrémité supérieure de la deuxième partie de plaque (72); et
une longueur de la partie de réception (73) dans le sens de la largeur du véhicule est inférieure à une longueur de la première partie de plaque (71) dans le sens de la largeur du véhicule.

4. Dispositif de colonne de direction (1) selon l'une quelconque des revendications 1 à 3, dans lequel:
la première partie de plaque (71) inclut une première partie de plaque plate (711) ayant une forme de plaque plate, et une première partie incurvée (712) qui s'étend vers le bas depuis une extrémité avant de la première partie de plaque plate (711) dans le sens avant-arrière du véhicule;
la deuxième partie de plaque (72) inclut une deuxième partie de plaque plate (721) ayant la forme de plaque plate, et une deuxième partie incurvée (722) qui s'étend depuis une extrémité avant de la deuxième partie de plaque plate (721) dans le sens avant-arrière du véhicule vers la première partie de plaque (71);
et
la partie de réception (73) est disposée entre la première partie incurvée (712) et la deuxième partie incurvée (722).
